# EUROPÄISCHE PATENTSCHRIFT

(11) **EP 4 248 102 B1**
(45) Veröffentlichungstag und Bekanntmachung des Hinweises auf die Patenterteilung: **04.03.2026**
(21) Anmeldenummer: 21806140.6
(22) Anmeldetag: 15.10.2021
(51) Int. Cl.: F16C 23/08, F16C 33/60, F16C 33/66

(54) **ROLLENLAGER**
ROLLER BEARING
PALIER A ROULEAUX

(30) Priorität: 20.11.2020 DE 102020130707
(43) Veröffentlichungstag der Anmeldung: 27.09.2023
(73) Patentinhaber: Schaeffler Technologies AG & Co. KG, 91074 Herzogenaurach (DE)
(72) Erfinder: BIERLEIN, Andreas, 97437 Haßfurt (DE); SCHRÖDER, Rainer, 97440 Egenhausen (DE)
(74) Vertreter: Schaeffler Technologies
(86) Internationale Anmeldenummer: PCT/DE2021/100829
(87) Internationale Veröffentlichungsnummer: WO 2022/105956

(56) Entgegenhaltungen:
- WO-A1-2013/047617
- DE-A1- 102017 110 742
- US-A1- 2012 087 611

## Beschreibung

### Technisches Gebiet

Die Erfindung betrifft ein Rollenlager, insbesondere ein zweireihiges Pendelrollenlager, umfassend einen Innenring und einen Außenring sowie eine Vielzahl von in zwei Reihen auf entsprechenden Laufbahnen am Innenring und am Außenring wälzende Wälzkörper, wobei der Außenring unter Bildung wenigstens zweier Ringabschnitte radial geteilt ist.

Ein solches zweireihiges Pendelrollenlager ist beispielsweise aus DE 10 2011 086 925 A1 bekannt. Das dort beschriebene Pendellager zeichnet sich dadurch aus, dass der Außenring und/oder der Innenring aus zwei Ringabschnitten respektive Ringhälften bestehen, die umfangsmäßig aneinander anschließen, das heißt, dass der jeweilige Ring radial geteilt ist, wobei jeweils eine radiale Teilungsebene gegeben ist. Derartige geteilte Ringe kommen vor allem bei großen Lagern zum Einsatz, da sich hierdurch die Montage der Lager erleichtert. Denn aufgrund der Mehrteiligkeit des Innen- und/oder Außenrings ist es möglich, deren Teile separat zu montieren. Solche Lager kommen beispielsweise in komplexen Antriebssträngen zum Einsatz und bieten den Vorteil, dass im Fall eines Lagerschadens das Lager ohne teilweiser oder kompletter Demontage des Antriebsstrangs ausgetauscht werden kann.

Der jeweilige Ring wird üblicherweise dadurch geteilt, dass er an definierten Stellen respektive in einer definierten Ebene gebrochen wird, damit beim Trennen kein Materialabtrag gegeben ist, was beispielsweise bei einem Auseinandersägen der Fall wäre. Beim Brechen bildet sich eine definierte Bruchlinie aus, das heißt, dass das Ringmaterial entlang der Korngrenzen bricht, wobei der Bruchlinienverlauf in der gewünschten Ebene erfolgt. Im Rahmen der Montage werden die entsprechenden Ringabschnitte sodann wieder zusammengesetzt. Im Falle eines geteilten Innenrings wird dieser beispielsweise über seitlich umlaufende Spannringe auf der Welle fixiert, während ein geteilter Außenring in das entsprechende Gehäusebauteil eingesetzt wird.

Der Erfindung liegt damit das Problem zugrunde, ein demgegenüber verbessertes Pendelrollenlager anzugeben.

Werden derart geteilte Rollenlager bzw. Pendelrollenlager beispielsweise in Windkraftanlagen eingesetzt, werden durch die Wälzkörper, die auf den Laufbahnen der Ringabschnitten abrollen und die Übergänge zwischen Ringabschnitten überrollen, die Stoßstellen zwischen den Ringabschnitten hoch belastet. So hat sich herausgestellt, dass aufgrund des Bruchs des Rings, dessen Bruchlinie quer zur Laufbahn verläuft, aufgrund der Gefügestruktur des Ringmaterials an den Kanten, die laufbahnseitig an den Ringabschnitten gegeben sind, kleine und kleinste Spitzen oder Unebenheiten gegeben sein können, die die Ebenmäßigkeit der Laufbahn beeinträchtigen. Wälzen nun im Betrieb die Wälzkörper über diesen geringfügig gestörten Laufbahnbereich, so kann es im Lauf der Zeit zu einer Laufbahnbeschädigung kommen, wie auch die Wälzkörper Schaden nehmen können. Um diesem Phänomen entgegenzuwirken, ist es aus DE10 2017 110 742 A1 bekannt, genau den Stoßbereich, in dem die Laufbahnabschnitte zweier Ringabschnitte aneinander anstoßen, mit einem Freischliff zu versehen, mithin also dort die Laufbahn geringfügig lokal etwas zu vertiefen, indem eine m Querschnitt einen stetigen Verlauf aufweisende, nut- oder kuhlenartige Vertiefung im Stoßbereich erzeugt wird, die nur wenige zehntel Millimeter bis wenige Millimeter tief und breit ist. Gleichwohl sind die Verbindungsmittel, welche die jeweiligen Ringabschnitte den Außenring des Rollenlagers bilden, stark beansprucht. So hat sich im Betrieb von geteilten Rollenlagern gezeigt, dass die sich Verbindungsmittel zwischen den Ringabschnitten am Außenrings lockern oder sogar abreißen und dadurch zu einem Lagerschaden führen.

WO 2013/047617 A1 und US 2012/087611 A1 offenbaren jeweils ein Rollenlager mit Ringen, die aus mehreren Segmenten bestehen, mit einem Freischliff. Die Ringsegmente weisen aber keine Stoßbereiche auf, da die Ringsegmente voneinander beabstandet sind.

Daher liegt der Erfindung die Aufgabe zugrunde, ein geteiltes Rollenlager, insbesondere Pendelrollenlager mit verbesserter Standzeit in Bezug auf die Verbindungsmittel zwischen den Ringabschnitten anzugeben.

### Darstellung der Erfindung

Diese Aufgabe mit den Anspruch 1 angegebenen Merkmalen gelöst. Vorteilhafte Aus- und Weiterbildung der Erfindung sind den Ansprüchen 2 bis 9 entnehmbar Weist zumindest jeder Freischliff am Außenring einen bogenförmigen, quer zum Stoßbereich sich erstreckenden Verlauf auf, wobei die größte radiale Tiefe T des Freischliffs genau im Stoßbereich liegt, und dehnt sich jeder Freischliff in Umfangsrichtung der Laufbahn des Außenrings über eine Länge aus, die maximal dem Umfangsabstand X zwischen dem Berührpunkt eines ersten Wälzkörpers und dem Berührpunkt eines bezogen auf diesen ersten Wälzkörper übernächsten Wälzkörpers mit der Laufbahn entspricht und die größer dem halben Durchmessers eines Wälzköpers an seiner durchmessergrößten Stelle ist, wird eine Aus- bzw. Einfädelspur für Wälzkörper beiderseits des Stoßbereichs zwischen zwei Ringabschnitten geschaffen, welche in der Funktion als Ausfädelspur die Pressung der Wälzkörper in die Laufbahnen bis zu Erreichen des unmittelbaren Stoßbereichs allmählich reduziert und welche in der Funktion als Einfädelspur die Pressung der Wälzkörper nachdem Überrollen des unmittelbaren Stoßbereichs in die Laufbahnen allmählich ansteigen lässt. Gerade der allmähliche Übergang stellt nach Erkenntnissen der Anmelderin sicher, dass die Verbindungsmittel beim Überrollen der Stoßbereiche im Umfangsrichtung kaum oder gar nicht belastet werden, sondern solche Kräfte allein zu einer elastischen Verformung der Ringabschnitte führen. Vorteilhaft ist es, wenn die Tiefe T des Freischliffs zwischen 0,05 und 0,0001 * Durchmessers D des Wälzkörpers seiner durchmessergrößten Stelle liegt, wie durch derartige Tiefen T keine, die Schwächung des Außenrings kompensierenden Maßnahmen erforderlich werden.

Die Montage bzw. Demontage ist vereinfacht, wenn der Innenring und/oder der Außenring in mehr als zwei Ringabschnitte radial geteilt ist, wobei in jedem Stoßbereich ein Freischliff vorgesehen ist. Bevorzugt ist hierbei, wenn der Außenring in jeweils zwei orthogonal zueinander verlaufenden Ebenen geteilt ist. Der Ring besteht aus dann vier z.B. um jeweils 90° umlaufenden Ringabschnitten, die sich umfangsmäßig ergänzen. In diesem Fall sind also am geteilten Ring vier Stoßstellen, die über entsprechende Freischliffe verfügen, vorgesehen.

Eine zweckmäßige Weiterbildung der Erfindung sieht vor, dass der Außenring unter Bildung axial benachbart zueinander angeordneter Ringabschnitte axial in zwei Teilringe geteilt ist. Gemäß dieser Ausgestaltung ist der Außenring, sofern er nicht radial geteilt ist, in zwei separate, axial aneinander anschließende Teilringe geteilt. Es sind dann aufgrund der axialen Teilung zwei Ringabschnitte, die jeweils einen einstückigen Teilring bilden, gegeben. Ist der Außenring jedoch in einer oder mehreren Radialebenen in einander umfangsmäßig ergänzende Ringabschnitte geteilt, und wird er zusätzlich in einer Axialebene geteilt, so liegt dem zufolge eine Mehrzahl an entsprechenden Ringabschnitten vor, die sich einerseits umfangsmäßig zu jeweils einem Teilring ergänzen, wobei sich andererseits die beiden mehrstückigen Teilringe sodann zu dem gesamten Außenring ergänzen. Ist also der Außenring beispielsweise radial längs einer Ebene in zwei Ringabschnitte geteilt und zusätzlich axial geteilt, so liegen insgesamt vier Ringabschnitte vor, wobei jeweils zwei Ringabschnitte einen Teilring bilden. Ist der Außenring in zwei orthogonal zueinanderstehenden Ebenen radial geteilt, und ist zusätzlich eine axiale Teilung vorgesehen, so liegen insgesamt acht Ringabschnitte vor, wobei sich jeweils vier Ringabschnitte zu einem Teilring ergänzen. Diese Axialteilung vereinfacht ebenfalls die Montage des Lagers, insbesondere wenn es sich um ein asymmetrisches Lager handelt.

Dabei ist es denkbar, dass die Teilringe in der Montagestellung aneinander anliegen, wobei wenigstens eine Radialbohrung zur Zufuhr eines Schmiermittels in das Lagerinnere im Bereich der axialen Trennstelle vorgesehen ist. Hier stoßen also die Teilringe direkt aneinander an. Um das Lager schmieren zu können ist es daher zweckmäßig, wenn eine oder mehrere Radialbohrungen vorgesehen sind, die den zusammengesetzten Außenring im Bereich der Trennebene oder Trennstelle durchsetzen. Hierüber kann Schmiermittel in das Wälzlagerinnere zugeführt werden, um das Lager permanent schmieren zu können.

Alternativ dazu ist es denkbar, dass die beiden Teilringe unter Bildung eines Ringspalts axial voneinander beabstandet sind. Diese axiale Beabstandung kann beispielsweise dadurch ermöglicht werden, dass die axialen Stirnflächen etwas geschliffen werden, mithin also ein geringer Materialabtrag erfolgt. Werden nun die Teilringe montiert und auf die Wälzkörperreihen aufgeschoben, so ist es aufgrund des Schliffs oder Materialabtrags nicht möglich, die Teilringe gänzlich aneinander zu schieben, ohne eine unzulässig hohe Lagervorspannung zu erwirken. Das heißt, dass ein Umfangsspalt gegeben ist, über den einerseits eine Schmiermittelzufuhr erfolgen kann. Zum anderen ist es möglich, die Vorspannung respektive Lagerluft bei einer oder beiden Wälzkörperreihen einzustellen, je nachdem wie der jeweilige Teilring axial relativ zu der jeweiligen Wälzkörperreihe positioniert wird. Die Ausgestaltung ist dabei derart, dass sich die beiden Teilringe axial gesehen auch dann nicht berühren, wenn die Lagerluft Null ist, mithin also kein Betriebsspiel gegeben ist respektive eine geringe Vorspannung eingestellt ist.

Neben dem Außenring kann zusätzlich auch der Innenring in einer oder mehreren Ebenen geteilt sein. Auch dieser weist im jeweiligen Stoßbereich einen entsprechenden Freischliff auf.

Ist der Innenring ebenfalls radial geteilt, so ist es zweckmäßig, diesen über entsprechende Spannringe auf der Welle zu verspannen. Diese Spannringe, die beispielsweise ebenfalls aus zwei Ringhälften bestehen, werden um den geteilten Innenring an jeweils einem Ende gelegt und miteinander verschraubt, so dass der Innenring fest auf die Welle gespannt wird.

Die Wälzkörper jeder Reihe selbst sind bevorzugt in jeweils einem Wälzkörperkäfig aufgenommen respektive geführt. Dieser Wälzkörperkäfig, der bevorzugt aus einem Metall besteht und beispielsweise ein Blechbauteil ist, wobei eine Ausführung aus Kunststoff nicht ausgeschlossen ist, fixiert respektive führt die entsprechenden Wälzkörper, im vorliegenden Fall Pendelrollen. Dabei kann es zweckmäßig sein, wenn jeder Wälzkörperkäfig unter Bildung wenigstens zweier Käfigabschnitte radial geteilt ist, was wiederum der Montage zuträglich ist.

Das Pendelrollenlager selbst kann ein asymmetrisches Lager sein, das heißt, dass der Druckwinkel der ersten Wälzkörperreihe und der Druckwinkel der zweiten Wälzkörperreihe unterschiedlich ist. Vorzugsweise werden identische Wälzkörper in den beiden Wälzkörperreihen verwendet, anders als im Stand der Technik insbesondere gemäß DE 10 2011 086 925 A1, wo in beiden Wälzkörperreihen unterschiedliche Wälzkörper vorgesehen sind. Es kann sich aber auch um ein symmetrisches Lager handeln, bei dem gleiche Druckwinkel gegeben sind.

### Kurze Darstellung der Figuren

Es zeigen:
- Figur 1: eine perspektivische Teilansicht eines erfindungsgemäßen zweireihigen Pendelrollenlagers,
- Figur 2a: eine Schnittansicht eines Teils des Pendelrollenlagers aus Figur 1 entlang der Linie II - II,
- Figur 2b: eine Ausgestaltung eines Freischliffs nach der Erfindung
- Figur 3: eine Schnittansicht entlang der Linie III - III in Figur 1, und
- Figur 4: ein zweites Ausführungsbeispiel eines erfindungsgemäßen Pendelrollenlagers in einer Schnittansicht entsprechend Figur 3.

### Wege zum Ausführen der Erfindung

Die Erfindung soll nun anhand der Figuren näher erläutert werden.

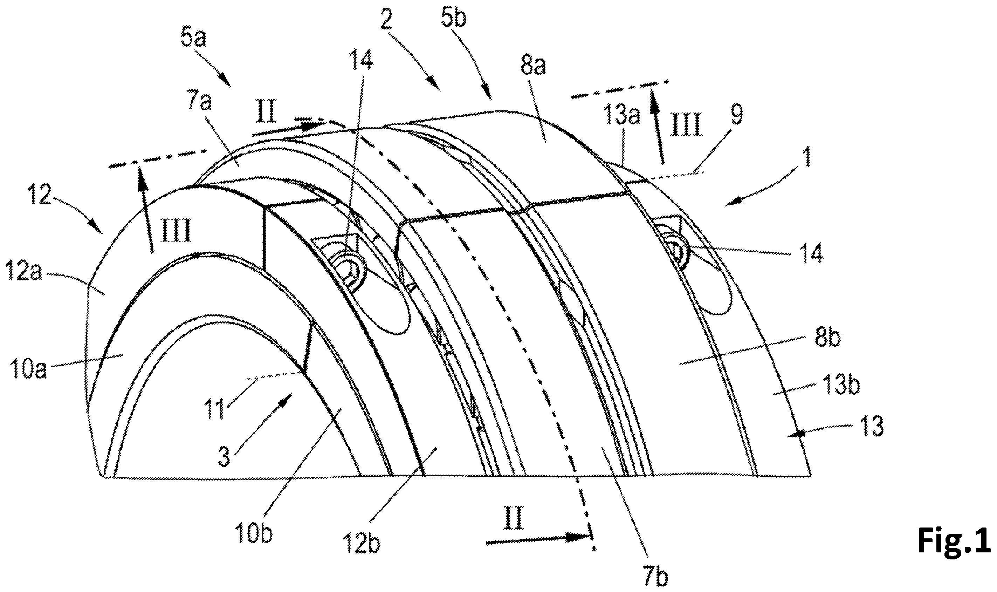

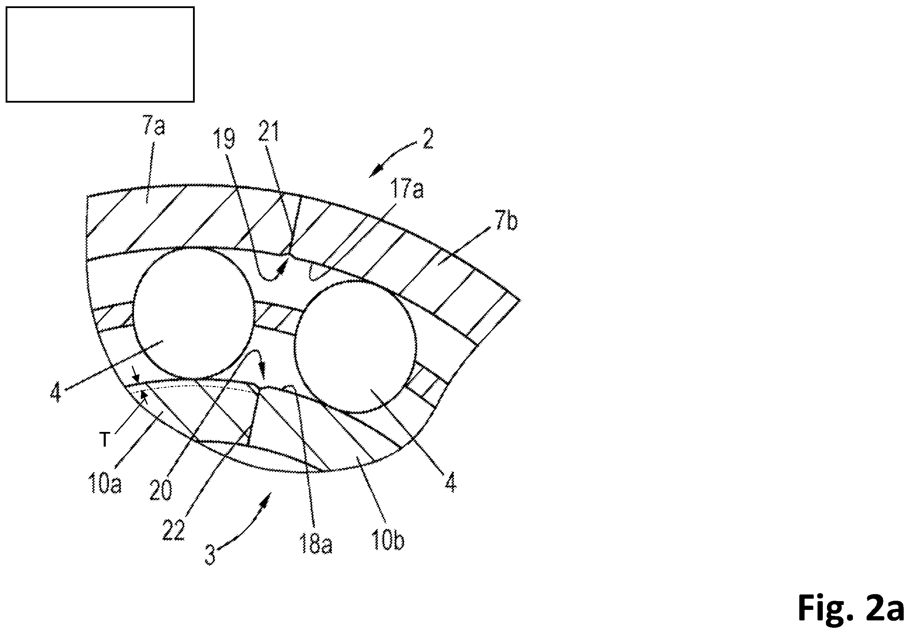

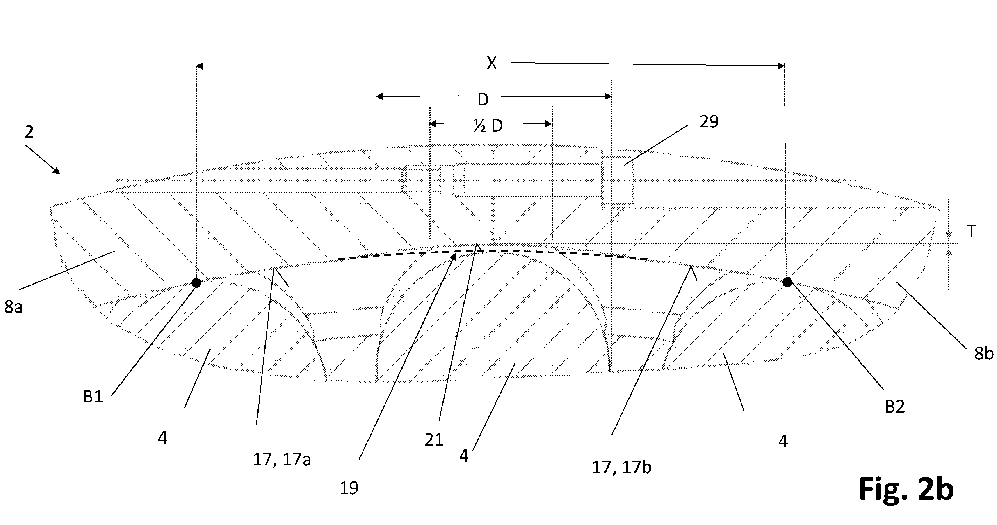

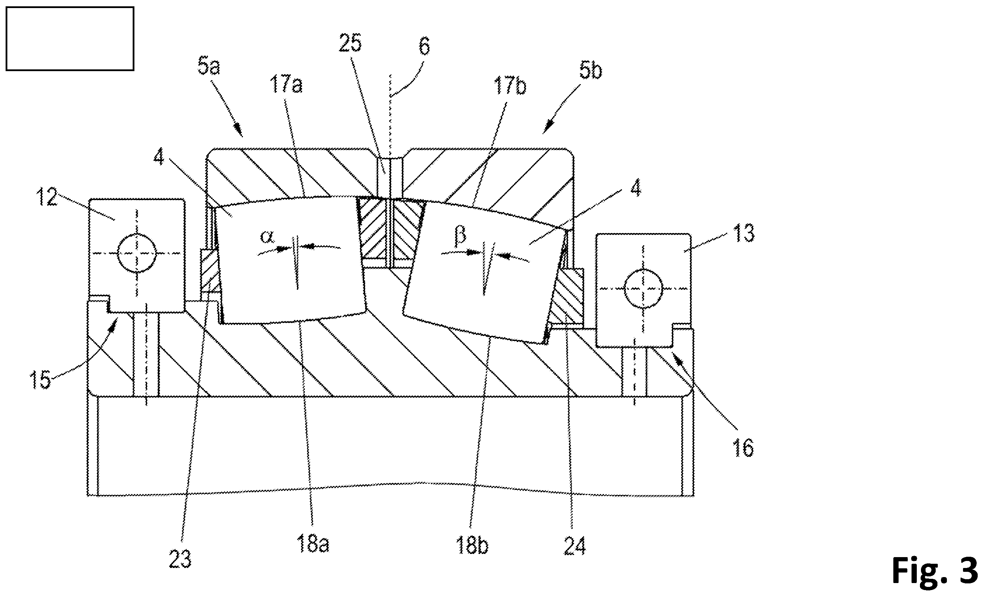

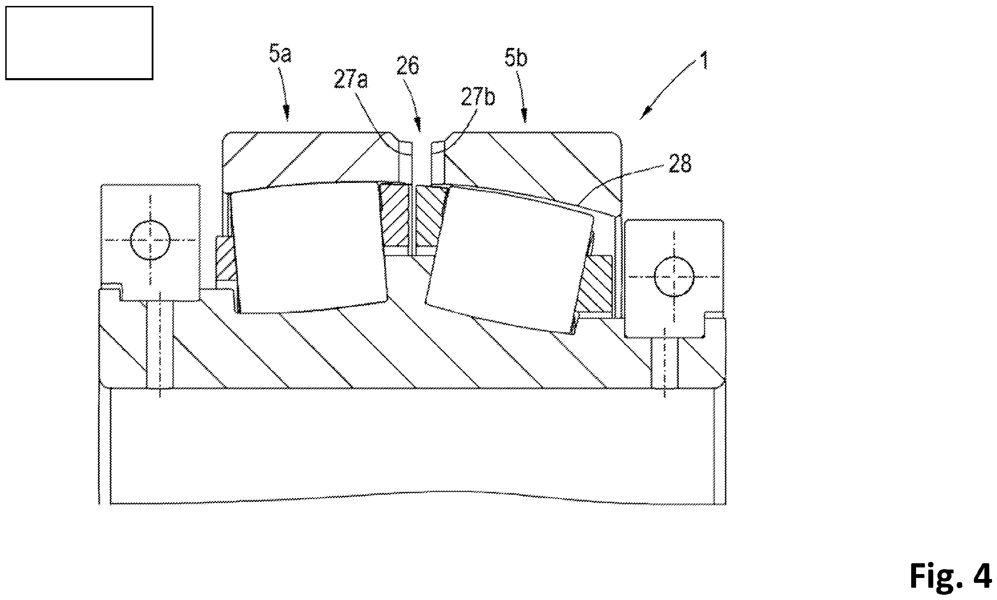

Figur 1 zeigt ein erfindungsgemäßes asymmetrisches zweireihiges Pendelrollenlager 1, umfassend einen Außenring 2, einen Innenring 3 sowie, siehe beispielsweise Figur 2, eine Vielzahl von zwischen Außenring 2 und Innenring 3 wälzenden Wälzkörper 4, hier in Form von tonnenförmigen Rollen, wie in Figur 3 erkennbar. Die Wälzkörper 4 beider Reihen sind identisch, siehe z.B. die Fig. 3 und 4. Ein solches Lager ist beispielsweise in einer Windturbine einsetzbar. In einer solchen Anwendung hat das Lager eine Breite von zumeist mehreren 100 mm.

Der Außenring besteht im gezeigten Beispiel aus zwei Teilringen 5a, 5b, nachdem er, wie insbesondere die Figuren 3 und 4 zeigen, längs einer Axialebene 6 geteilt ist.

Des Weiteren besteht jeder Teilring 5a, 5b aus zwei Ringabschnitten 7a, 7b beziehungsweise 8a, 8b, die einander, siehe Figur 1, umfangsmäßig zu dem jeweiligen Teilring 5a, 5b ergänzen. Die Teilringe sind also längs einer Radialebene 9, siehe Figur 1, geteilt. Das heißt, dass der Außenring 2 insgesamt längs einer Axialebene 6 und einer Radialebene 9 in insgesamt vier Ringabschnitte 7a, 7b und 8a, 8b geteilt ist, die einander zu zwei umlaufenden Teilringen 5a, 5b ergänzen.

Im gezeigten Beispiel ist auch der Innenring 3 in zwei Ringabschnitte 10a, 10b längs einer Radialebene 11 geteilt. Auch diese Ringabschnitte 10a, 10b ergänzen sich umfangsmäßig zum Innenring 3. Wie Figur 3 zeigt, ist der Innenring jedoch nicht axial geteilt, er ist lediglich längs der Radialebene 11 geteilt.

Zur Fixierung des Innenrings 3 auf einer Welle (nicht gezeigt) oder dergleichen sind zwei Spannringe 12, 13 vorgesehen, die ihrerseits aus zwei Spannringabschnitten 12a, 12b respektive 13a, 13b bestehen, und die über entsprechende Schraubverbindungen 14 fest miteinander verbunden sind, um den geteilten Innenring 3, an dessen axialen Endabschnitten sie angeordnet sind, fest auf die Welle zu spannen. Der Innenring 3 kann hierzu eine entsprechende ringnutartige Eingriffsgeometrie 15, 16 an den jeweiligen Enden aufweisen, in die die Spannringe 12, 13 formschlüssig eingreifen.

Wie beschrieben können die Ringe zur Teilung längs der jeweiligen Ebene 6 und insbesondere 9 gebrochen sein. Dies führt aufgrund des Gefüges des Materials, üblicherweise Stahl, dazu, dass, nachdem der Bruch entlang der Korngrenzen erfolgt, eine von der Oberfläche her undefinierte Bruchzone gegeben ist, so dass sich, wenn die Ringabschnitte umfangsmäßig zusammengesetzt werden, vor allem im Kantenbereich der Ringabschnitte 7a, 7b, 8a, 8b respektive 10a, 10b, wo sich die jeweiligen Laufbahnen 17, 18 am Außenring 2 beziehungsweise am Innenring 3 befinden, lokale Spitzen oder Inhomogenitäten ergeben. Diese werden nun dadurch beseitigt, dass im Stoßbereich zweier Ringabschnitte jeweils ein Freischliff 19, 20, siehe Figur 2a, ausgebildet wird. Ein solcher Freischliff bildet eine Tiefe T von wenigen zehntel Millimeter bis wenige Millimeter aufweisende Vertiefung 21, 22, wie in Figur 2a dem Grunde nach und keinesfalls maßstabsgerecht für die Vertiefung 22 gezeigt ist. Dieser Freischliff 19, 20 respektive die Vertiefung 21, 22 erstreckt sich über die gesamte Länge des axialen Stoßes. Eine erfindungsgemäße Ausbildung einer Vertiefung 21 bzw. eines Freischiffs 19 an einem Außenring 2 bzw. zwischen den den Außenring 2 bildenden Ringabschnitten 8a, 8b ist Fig. 2b gezeigt. Der dort gezeigte Freischliff 19 ist als bogenförmiger, nach radial außen gerichtet Vertiefung 21 in Laufbahn 17 des Außenrings 2 eingebracht, wobei die größte radiale Tiefe T der Vertiefung 21 dort gegeben ist, wo die beiden Ringabschnitte 8a, 8b aneinanderstoßen. Im Ausführungsbeispiel gemäß Fig. 2b beträgt die Tiefe T etwa 0,025 des Durchmessers D der Wälzkörper 4. Diese Vertiefung 21 hat im in Fig. 2b gezeigten Ausführungsführungsbespiel eine Breite -also eine umfängliche Erstreckung-, welche dem Durchmesser D der zwischen den Lagerringen 2, 3 abrollenden Wälzkörper 4 entspricht. Diese relative große Breite der Vertiefung 21 zwischen den beiden Ringabschnitten 8a, 8b des Außenrings 2 erfüllt dabei einen doppelten Zweck: Durch die jeweiligen Freischliffe 19 (20) und ihre Ausdehnung in Umfangsrichtung des Lagers 1 werden die entsprechenden Stoßbereiche lastfrei gestellt. Damit kann, trotz einer im Stoßbereich aufgrund des Bruchs zwangsläufig gegebenen Gefügeinhomogenität, ein dauerhafter Betrieb sichergestellt werden, da die jeweiligen Laufbahnen in den Stoßbereichen eben nicht belastet und hierüber beschädigt werden können. Darüber hinaus stellen große Ausdehnungen von Vertiefungen 21 (22) in Umfangsrichtung des Lagers 1 auch sicher, dass Passschraube 29, welche gemäß Fig. 2b die beiden den Außenring 2 bildenden Ringabschnitte 8a, 8b verbinden, während des Betriebs des Lagers 1 nicht durch umlaufende Wälzkörper 4 belastet werden, selbst wenn die von Ringabschnitten 8a, 8b gebildeten Lagerringe 2 etwas von der Form eines idealen Kreisrings abweichen. Vielmehr bilden die in Umfangsrichtung großen Ausdehnungen der bogenförmigen Vertiefungen 21( 22) zusammen mit dem tangentialen Übergangsbereich von Laufbahn und Freischliff 19 (20) eine Art Ein- bzw. Ausspurbereich für Wälzkörper 4, die die unmittelbare Stoßstelle zwischen zwei Ringabschnitten 8a, 8b passiert haben. Damit die jeweiligen Vertiefungen 21, 22 überhaupt die Wirkung von die Schrauben 29 entlastenden Ein- bzw. Ausspurbereichen entfalten können, sollte die Breite der Vertiefungen 21, 22 in Umfangsrichtung gleich oder größer dem halben Durchmesser D der verwendeten Wälzkörper 4 sein. Vorteilhafte Wirkungen von Vertiefungen 21, 22 sind dann nicht mehr wahrnehmbar, wenn deren Ausdehnung im Umfangsrichtung größer dem Umfangsabstand X zwischen dem Berührpunkt B1 eines ersten Wälzkörpers 4 und dem Berührpunkt B2 eines bezogen auf diesen ersten Wälzkörper 4 übernächsten Wälzkörpers 4 mit der Laufbahn 17 ist.

Figur 3 zeigt eine Schnittansicht entlang der Linie III - III gemäß Figur 1. Ersichtlich sind die Wälzkörper 4 als tonnenförmige Rollen ausgeführt, die auf den entsprechenden Laufbahnen 17a, 18a beziehungsweise 17b, 18b des Innenrings 3 sowie der Teilringe 5a, 5b wälzen. Sie sind in jeweils einem Käfig 23, 24, der gegebenenfalls auch radial in wenigstens zwei Käfighälften geteilt ist, aufgenommen und geführt. Beim Ausführungsbeispiel gemäß Figur 3 liegen die beiden Teilringe 5a, 5b axial aneinander an, sie berühren einander also im Bereich der sie trennenden Axialebene 6. Um Schmiermittel zuführen zu können, ist eine oder sind mehrere Radialbohrungen 25 vorgesehen.

Aufgrund des axialen Anliegens der Teilringe 5a, 5b ist bei der Ausgestaltung gemäß Figur 3 ein Einstellen der Lagerluft innerhalb der jeweiligen Wälzkörperreihen nicht möglich, mithin also kein Spielausgleich gegeben.

Figur 4 zeigt demgegenüber eine Ausführungsform eines zweireihigen Pendelrollenlagers 1, die insoweit der Ausführungsform gemäß der Figuren 1 bis 3 entspricht, insbesondere was auch die Ausbildung der entsprechenden Ringabschnitte sowie der entsprechenden Freischliffe 19, 20 an den Stoßbereichen angeht. Bei der Ausgestaltung gemäß Figur 4 sind jedoch die Teilringe 5a, 5b axial nicht aneinander anliegend positioniert, vielmehr bildet sich ein umlaufender Ringspalt 26, über den einerseits die Schmiermittelzufuhr erfolgen kann. Dieser Ringspalt 26 kann dadurch ausgebildet werden, dass die Teilringe 5a, 5b an ihren Stirnflächen 27a, 27b geschliffen werden, mithin also geringfügig Material abgetragen wird.

Zum anderen kann, da sie einander nicht berühren, das Spiel respektive die Lagerluft in den jeweiligen Wälzkörperreihen eingestellt werden, wie exemplarisch in Figur 4 gezeigt ist, wo ein geringes Spiel 28 als Spalt im Bereich der rechten Lagerreihe dargestellt ist. Ein solches Spiel respektive die Lagerluft kann durch entsprechende axiale Positionierung des jeweiligen Teilrings 5a, 5b eingestellt werden, sie kann aber auch, wenn gewünscht, vollständig ausgeglichen werden, das heißt, dass dann kein Spiel respektive keine Lagerluft gegeben ist, wie auch eine geringe Vorspannung bei Bedarf eingestellt werden kann. Unabhängig davon liegen die beiden Teilringe 5a, 5b selbst bei Einstellung einer geringen Vorspannung axial nicht aneinander an, da dies letztlich die Einstellungsmöglichkeit begrenzen würde.

Wie die Figuren 3 und 4 schließlich zeigen, handelt es sich bei dem Pendelrollenlager 1 um ein asymmetrisches Pendelrollenlager, nachdem die Druckwinkel, die die beiden Wälzkörperreihen aufweisen, geringfügig unterschiedlich sind. Der Druckwinkel der rechts gezeigten Wälzkörperreihe ist etwas größer als der Druckwinkel der links gezeigten Wälzkörperreihe. Die Druckwinkel sind exemplarisch mit α und β dargestellt. Die Wälzkörper 4 beider Wälzkörperreihen sind jedoch identisch.

Wenngleich im beschriebenen Beispiel der Außenring 2 und der Innenring 3 umfangsmäßig gesehen in jeweils zwei Ringabschnitte 7a, 7b beziehungsweise 8a, 8b bezüglich des Außenrings 2 sowie 10a, 10b bezüglich des Innenrings 3 geteilt sind, ist es selbstverständlich denkbar, den einen oder beide Ringe auch in zwei vorzugsweise orthogonal zueinander stehenden Ebenen radial zu teilen, so dass jeder Ring respektive Teilring dann aus vier einander ergänzenden Ringabschnitten bestehen würde.

### Bezugszeichenliste

- 1.: Pendelrollenlager
- 2.: Außenring
- 3.: Innenring
- 4.: Wälzkörper
- 5a: Teilring
- 5b: Teilring
- 6: Axialebene
- 7a: Ringabschnitt
- 7b: Ringabschnitt
- 8a: Ringabschnitt
- 8b: Ringabschnitt
- 9: Radialebene
- 10a: Ringabschnitt
- 10b: Ringabschnitt
- 11: Radialebene
- 12a: Spannringabschnitt
- 12b: Spannringabschnitt
- 13a: Spannringabschnitt
- 13b: Spannringabschnitt
- 14: Schraubverbindung
- 15: Eingriffsgeometrie
- 16: Eingriffsgeometrie
- 17: Laufbahn
- 17a: Laufbahn
- 17b: Laufbahn
- 18: Laufbahn
- 18a: Laufbahn
- 18b: Laufbahn
- 19: Freischliff
- 20: Freischliff
- 21: Vertiefung

- 22: Vertiefung
- 23: Käfig
- 24: Käfig
- 25: Radialbohrung
- 26: Ringspalt
- 27a: Stirnfläche
- 27b: Stirnfläche
- 28: Spiel
- 29: Passschraube
- 30: Schaft, gewindefrei

## Patentansprüche

1. Rollenlager, insbesondere Pendelrollenlager, umfassend einen Innenring und einen Außenring sowie eine Vielzahl von in zwei Reihen auf entsprechenden Laufbahnen 17a, 17b, 18a, 18b am Innenring 3 und am Außenring 2 wälzende Wälzkörper, wobei der Innenring 2 und/oder der Außenring 3 unter Bildung wenigstens zweier Ringabschnitte radial geteilt ist, wobei im Stoßbereich von jeweils zwei Ringabschnitten 7a, 7b, 8a, 8b, 10a, 10b mindestens eine Passschraube 29 vorgesehen ist, welche die beiden Ringabschnitte 7a, 7b; 8a, 8b;10a,10b verbindet, wobei der Stoßbereich zwischen den jeweiligen Ringabschnitten 7a, 7b; 8a, 8b; 10a, 10b jeden gewindefreien Schaft 30 der jeweiligen Passschraube 29 schneidet, und wobei die Laufbahn im Stoßbereich zweier Ringabschnitte 7a, 7b, 8a, 8b, 10a, 10b einen die Laufbahn 17a, 17b, 18a, 18b lokal vertiefenden Freischliff 19, 20 aufweist,
**dadurch gekennzeichnet,**
**dass** zumindest jeder Freischliff 19 am Außenring 3 einen bogenförmigen, quer zum Stoßbereich sich erstreckenden Verlauf hat, wobei die größte radiale Tiefe T des Freischliffs genau im Stoßbereich liegt, und sich jeder Freischliff 19 in Umfangsrichtung der Laufbahn 17 des Außenrings 3 über eine Länge ausdehnt, die maximal dem Umfangsabstand X zwischen dem Berührpunkt B1 eines ersten Wälzkörpers 4 und dem Berührpunkt B2 eines bezogen auf diesen ersten Wälzkörper 4 übernächsten Wälzkörpers 4 mit der Laufbahn 17 entspricht und größer dem halben Durchmessers D eines Wälzköpers 4 an seiner durchmessergrößten Stelle ist.

2. Rollenlager nach Anspruch 1
**dadurch gekennzeichnet,**
**dass** die Tiefe T des Freischliffs zwischen 0,05 und 0,0001 * Durchmessers D des Wälzkörpers 4 seiner durchmessergrößten Stelle ist.

3. Rollenlager nach Anspruch 1 oder 2
**dadurch gekennzeichnet,**
**dass** der Innenring 3 und/oder der Außenring 3 in mehr als zwei Ringabschnitte 8a. 8b, 10a, 10b radial geteilt ist, wobei in jedem Stoßbereich ein Freischliff 19, 20 vorgesehen ist.

4. Rollenlager nach einem der vorangehenden Ansprüche, **dadurch gekennzeichnet, dass** der Innenring 3 und/oder der Außenring 2 in jeweils zwei orthogonal zueinander verlaufenden Ebenen 9 geteilt sind.

5. Rollenlager nach einem der vorangehenden Ansprüche, **dadurch gekennzeichnet, dass** der Außenring 3 unter Bildung axial benachbart zueinander angeordneter Ringabschnitte 7a, 7b; 8a, 8b axial in zwei Teilringe 5a, 5b geteilt ist.

6. Rollenlager nach Anspruch 5, **dadurch gekennzeichnet, dass** die Teilringe 5a, 5b aneinander anliegen, wobei wenigstens eine Radialbohrung 25 zur Zufuhr eines Schmiermittels in das Lagerinnere im Bereich der axialen Trennstelle vorgesehen ist.

7. Rollenlager nach Anspruch 5, **dadurch gekennzeichnet, dass** die beiden Teilringe 5a, 5b unter Bildung eines Spalts 26 axial voneinander beanstandet sind.

8. Rollenlager nach einem der vorangehenden Ansprüche, **dadurch gekennzeichnet, dass** der Druckwinkel (α) der ersten Wälzkörperreihe und der Druckwinkel (β) der zweiten Wälzkörperreihe unterschiedlich sind, wobei die Wälzkörper beider Wälzkörperreihen identisch sind.

9. Rollenlager nach einem der vorangehenden Ansprüche, **dadurch gekennzeichnet, dass** die Wälzkörper (4) jeder Reihe in jeweils einem Wälzkörperkäfig (23, 24) aufgenommen sind.

## Claims

1. A roller bearing, in particular a spherical roller bearing, comprising an inner ring and an outer ring as well as a plurality of rolling elements arranged in two rows on corresponding raceways (17a, 17b, 18a, 18b) on the inner ring (3) and on the outer ring (2), wherein the inner ring (2) and/or the outer ring (3) is radially divided, forming at least two ring sections, wherein at least one fitted screw (29) is provided in the abutment area of each pair of ring sections (7a, 7b, 8a, 8b, 10a, 10b), which fitted screw connects the two ring sections (7a, 7b; 8a, 8b; 10a, 10b), wherein the abutment area between the respective ring sections (7a, 7b; 8a, 8b; 10a, 10b) cuts each threadless shaft (30) of the respective fitted screw (29), and wherein the raceway in the abutment area of two ring sections (7a, 7b, 8a, 8b, 10a, 10b) has a relief (19, 20) locally deepening the raceway (17a, 17b, 18a, 18b),
**characterised in that**
at least each relief (19) on the outer ring (3) has an arc-shaped profile extending transversely to the abutment area, wherein the greatest radial depth (T) of the relief lies exactly in the abutment area, and each relief (19) extends in the circumferential direction of the raceway (17) of the outer ring (3) over a length that corresponds at most to the circumferential distance (X) between the contact point (B1) of a first rolling element (4) and the contact point (B2) of a rolling element (4) next but one with respect to this first rolling element (4) with the raceway (17) and is greater than half the diameter (D) of a rolling element (4) at its largest diameter point.

2. The roller bearing according to claim 1,
**characterised in that**
the depth (T) of the relief is between 0.05 and 0.0001 * the diameter (D) of the rolling element (4) at its largest diameter point.

3. The roller bearing according to claim 1 or 2,
**characterised in that**
the inner ring (3) and/or the outer ring (3) is radially divided into more than two ring sections (8a, 8b, 10a, 10b), wherein a relief (19, 20) is provided in each abutment area.

4. The roller bearing according to any one of the preceding claims, **characterised in that** the inner ring (3) and/or the outer ring (2) are each divided into two planes (9) extending orthogonally to each other.

5. The roller bearing according to any one of the preceding claims, **characterised in that** the outer ring (3) is axially divided into two partial rings (5a, 5b), forming ring sections (7a, 7b; 8a, 8b) that are axially adjacent to one another.

6. The roller bearing according to claim 5, **characterised in that** the partial rings (5a, 5b) abut each other, wherein at least one radial bore (25) is provided for supplying a lubricant into the bearing interior in the region of the axial separation point.

7. The roller bearing according to claim 5, **characterised in that** the two partial rings (5a, 5b) are axially separated from each other, forming a gap (26).

8. The roller bearing according to any one of the preceding claims, **characterised in that** the pressure angle (α) of the first row of rolling elements and the pressure angle (β) of the second row of rolling elements are different, wherein the rolling elements of both rows of rolling elements are identical.

9. The roller bearing according to any one of the preceding claims, **characterised in that** the rolling elements (4) of each row are received in a rolling element cage (23, 24).

## Revendications

1. Palier à rouleaux, en particulier palier à rotule sur rouleaux, comprenant un anneau intérieur et un anneau extérieur ainsi qu'une pluralité de corps roulants disposés sur deux rangées sur des chemins de roulement (17a, 17b, 18a, 18b) correspondants sur l'anneau intérieur (3) et sur l'anneau extérieur (2), dans lequel l'anneau intérieur (2) et/ou l'anneau extérieur (3) sont divisés radialement pour former au moins deux sections annulaires, dans lequel au moins une vis d'ajustement (29) est fournie dans la zone de butée des deux sections annulaires (7a, 7b, 8a, 8b, 10a, 10b) respectivement, laquelle relie les deux sections annulaires (7a, 7b ; 8a, 8b ; 10a, 10b), dans lequel la zone de butée entre les sections annulaires (7a, 7b ; 8a, 8b ; 10a, 10b) respectives coupe chaque tige (30) sans filetage de la vis d'ajustement (29) respective, et dans lequel le chemin de roulement dans la zone de butée des deux sections annulaires (7a, 7b, 8a, 8b, 10a, 10b) présente une dépouille (19, 20) approfondissant localement le chemin de roulement (17a, 17b, 18a, 18b),
**caractérisé en ce**
**que** l'au moins chaque dépouille (19) sur l'anneau extérieur (3) comporte un profil en forme d'arc s'étendant transversalement à la zone de butée, dans lequel la plus grande profondeur (T) radiale de la dépouille se situe exactement dans la zone de butée, et chaque dépouille (19) s'étend dans la direction circonférentielle du chemin de roulement (17) de l'anneau extérieur (3) sur une longueur, laquelle correspond au plus à la distance circonférentielle (X) entre le point de contact (B1) d'un premier corps roulant (4) et le point de contact (B2) d'un corps roulant (4) situé deux places après ledit premier corps roulant (4) comportant le chemin de roulement (17) et est supérieure à la moitié du diamètre (D) d'un corps roulant (4) à son point de diamètre le plus grand.

2. Palier à rouleaux selon la revendication 1
**caractérisé en ce**
**que** la profondeur (T) de la dépouille est comprise entre 0,05 et 0,0001 * diamètre (D) du corps roulant (4) à son point de diamètre le plus grand.

3. Palier à rouleaux selon la revendication 1 ou 2
**caractérisé en ce**
**que** l'anneau intérieur (3) et/ou l'anneau extérieur (3) sont divisés radialement en plus de deux sections annulaires (8a, 8b, 10a, 10b), dans lequel une dépouille (19, 20) est fournie dans chaque zone de butée.

4. Palier à rouleaux selon l'une quelconque des revendications précédentes, **caractérisé en ce que** l'anneau intérieur (3) et/ou l'anneau extérieur (2) sont respectivement divisés en deux plans (9) s'étendant orthogonalement l'un par rapport à l'autre.

5. Palier à rouleaux selon l'une quelconque des revendications précédentes, **caractérisé en ce que** l'anneau extérieur (3) est divisé axialement en deux anneaux partiels (5a, 5b) pour former des sections annulaires (7a, 7b ; 8a, 8b) axialement adjacentes.

6. Palier à rouleaux selon la revendication 5, **caractérisé en ce que** les anneaux partiels (5a, 5b) sont jointifs l'un par rapport à l'autre, dans lequel au moins un alésage radial (25) est conçu pour amener un lubrifiant à l'intérieur de palier dans la zone du point de séparation axiale.

7. Palier à rouleaux selon la revendication 5, **caractérisé en ce que** les deux anneaux partiels (5a, 5b) sont espacés axialement l'un de l'autre pour former une fente (26).

8. Palier à rouleaux selon l'une quelconque des revendications précédentes, **caractérisé en ce que** l'angle de pression (α) de la première rangée de corps roulants et l'angle de pression (β) de la seconde rangée de corps roulants sont différents, dans lequel les corps roulants des deux rangées de corps roulants sont identiques.

9. Palier à rouleaux selon l'une quelconque des revendications précédentes, **caractérisé en ce que** les corps roulants (4) de chaque rangée sont respectivement logés dans une cage à corps roulants (23, 24).
